# EUROPÄISCHE PATENTANMELDUNG

(11) **EP 0 745 451 A1**
(43) Veröffentlichungstag der Anmeldung: **04.12.1996**
(21) Anmeldenummer: 96104583.8
(22) Anmeldetag: 22.03.1996
(51) Int. Cl.: B23K 35/02, B23K 11/30

(54) **Elektrode zum Widerstands-Punktschweissen von Aluminium-Blechen**

(30) Priorität: 03.06.1995 DE 19520514
(71) Anmelder: Bayerische Motoren Werke Aktiengesellschaft, 80788 München (DE)
(72) Erfinder: Gschossmann, Nikolaus, 83236 Übersee (DE); Schubert, Franz, 85586 Poing (DE); Erras, Markus, 85757 Karlsfeld (DE); Müller, Dietmar, 92521 Schwarzenfeld/Traunricht (DE)

(57) **Zusammenfassung**

Um Aluminiumbleche (3) mit gängigen Kupfer-Elektrodenkappen bei langer Standzeit des Schweißwerkzeuges verschweißen zu können, ist zwischen der Elektrodenkappe (4) sowie der Blechoberfläche ein Folienabschnitt (5) vorgesehen, der relativ zur Elektrodenkappe (4) verschiebbar und Bestandteil eines Folienbandes ist. Die dem Aluminiumblech (3) zugewandte Oberfläche des Folienabschnittes (5) besteht aus einem Material mit hohem Nickelanteil, während in der Kontaktfläche zwischen der Elektrodenkappe (4) sowie dem Folienabschnitt (5) als Material Molybdän oder Graphit vorgesehen ist.

## Beschreibung

Die Erfindung betrifft eine Elektrode zum Widerstands-Punktschweißen von Aluminium-Blechen mit einem zwischen der Elektrodenkappe sowie der Blechoberfläche vorgesehenen Folienabschnitt, der relativ zur Elektrodenkappe verschiebbar ist.

In der nicht vorveröffentlichten deutschen Patentanmeldung P 44 16 504.8 ist eine derartige Elektrode nach dem Oberbegriff des Anspruchs 1 beschrieben. Der Folienabschnitt, der bevorzugt Bestandteil eines Folienbandes ist, schützt die Elektrode dabei vor Anlegierungen von Aluminium. Eine derartige Anlegierung beim Schweißen von Aluminium-Blechen mit üblichen Elektrodenkappen aus Kupfer-Legierungen beschädigt nämlich die Elektrodenoberfläche, was eine Standzeitreduktion zur Folge hat und ferner zu einer nicht mehr ausreichenden Festigkeit des Schweißpunktes sowie zum einem Festkleben der Elektroden bis hin zu Beschädigungen an der Blechoberfläche führen kann.

Indem nun zwischen die Elektrodenkappe sowie die Blechoberfläche ein Folienabschnitt aus einem elektrisch und thermisch gut leitfähigen Material vorgesehen wird, der nach einem oder mehreren Schweißpunkten erneuert wird, können sich an der Elektrodenkappe keine Anlegierungen bilden, so daß deren Standzeit deutlich erhöht wird. Besonders einfach kann der Folilenabschnitt dabei erneuert werden, wenn - wie in der oben genannten Patentanmeldung beschrieben - dieser Folienabschnitt Bestandteil eines von einer Spule abwickelbaren Folienbandes ist, das beispielsweise zwischen zwei Spulen geführt und über die Elektrode gespannt ist und bei Verschleiß am an der Elektrodenkappe anliegenden Folienabschnitt taktweise weiterbefördert wird. Allerdings wurde in Versuchen beim Verschweißen üblicher Aluminiumbleche bei Verwendung naheliegender und gängiger Materialien für das Folienband ein Verkleben entweder zwischen dem Folienabschnitt und der Elektrodenkappe oder auch zwischen dem Folienabschnitt und dem Aluminumblech beobachtet. Diese Klebeeffekte sind jedoch nachteilig, da sie entweder die Qualität des Schweißpunktes negativ beeinflussen oder im schlimmsten Falle einen Weitertransport des Folienbandes gegenüber der Elektrodenkappe überhaupt verhindern.

Aufgabe der vorliegenden Erfindung ist es daher, eine besonders günstige Lösung aufzuzeigen, mit Hilfe derer gängige Aluminiumbleche unter Zwischenlage eines Folienabschnittes, der bei Verschleißerscheinungen relativ zur Elektrodenkappe verschiebbar ist, widerstands-punktgeschweißt werden können. Unter den Begriff gängiger Aluminiumbleche sollen dabei sowohl Bleche mit Oxidschichten fallen, als auch solche, bei denen die Oxidschicht beispielsweise durch Beizen oder Schleifen entfernt wurde. Ferner sollen unter diesen Begriff der gängigen Aluminiumbleche auch solche mit üblichen Beschichtungen, beispielsweise mit einer Titan-Zirkon-Beschichtung fallen. Das Grundmaterial der Bleche kann dabei solches der 5er-Reihe oder der 6er-Reihe sein, d. h. es kann es sich um AlMg3 bis AlMg5 (internationale geläufige Bezeichnung: 5182) oder auch um AlMg0,4 Si 1, 2 (internationale geläufige Bezeichnung: 6016) handeln.

Zur Lösung der gestellten Aufgabe wird vorgeschlagen, daß die dem Aluminiumblech zugewandte Oberfläche des Folienabschnittes aus einem Material mit hohem Nickel-Anteil besteht, und daß in der Kontaktfläche zwischen der Elektrodenkappe sowie dem Folienabschnitt als Material Molybdän oder Graphit vorgesehen ist. Vorteilhafte Weiterbildungen der Erfindung sind Inhalt der Unteransprüche.

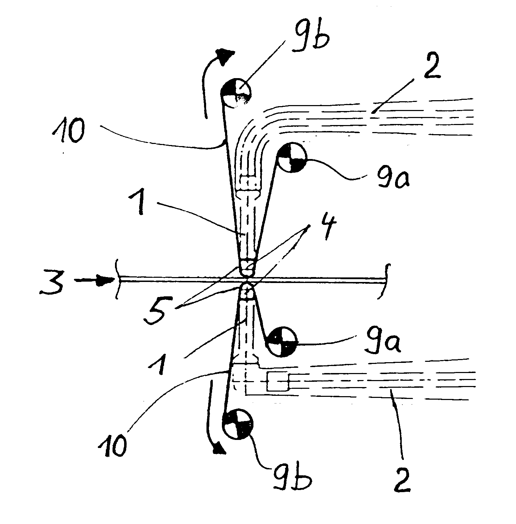

Zur näheren Erläuterung wird auf die beigefügte Figur verwiesen, die erfindungsgemäße Elektroden mit jeweils einem Folienband bzw. Folienabschnitt beim Verschweißen von Aluminiumblechen zeigt.
Dabei sind mit der Bezugsziffer 1 die beiden Elektroden einer Widerstands-Punktschweiß-Zange bezeichnet, die wie üblich an den beiden Pinolen 2 der nicht näher dargestellten Zange befestigt sind. Mit dieser Punktschweiß-Zange sollen zwei aufeinanderliegende Aluminium-Bleche 3 wie üblich miteinander verschweißt werden, d. h. im Schweißpunkt werden die beiden Aluminium-Bleche 3 durch die Elektroden 1 gegeneinandergepreßt, wobei punktweise zwischen den Elektroden über die Bleche 3 ein hoher Stromfluß stattfindet.

Um die Elektroden 1 bzw. die im Spitzenbereich vorgesehenen, an sich üblichen Elektrodenkappen 4 vor Oberflächenbeschädigungen zu schützen, ist jeder Elektrode 1 bzw. Elektrodenkappe 4 ein Folienabschnitt 5 zugeordnet, der insbesondere an der Spitze der Elektrodenkappe 4, aber auch an den einander gegenüberliegenden Seitenflächen der Elektrodenkappe 4 anliegt. Jeder Folienabschnitt 5 liegt somit zwischen der jeweiligen Elektrode 1 bzw. deren Elektrodenkappe 4 sowie den Blechen 3 und schützt die zugeordnete Elektrodenkappe vor Beschädigungen, so insbesondere vor einer Anlegierung von Aluminium.

Jeder Folienabschnitt 5 ist Bestandteil eines von einer Spule 9a abwickelbaren Folienbandes 10, dessen anderes Ende auf einer Spule 9b aufgewickelt ist. Jede Spule 9b kann einen geeigneten Antriebsmechanismus aufweisen, der bei einem Verschleiß des aktuell an der Elektrodenkappe 4 anliegenden Folienabschnittes 5 das Folienband 10 zwischen zwei Schweißvorgängen um einen gewissen Betrag bzw. Weg weiterbefördert, so daß ein neuer Folienabschnitt 5 an der Elektrodenkappe 4 zum Anliegen kommt. Dieser beschriebene Weitertransport funktioniert jedoch nur dann zufriedenstellend, wenn der Folienabschnitt 5 während des Schweißens nicht mit der Elektrodenkappe 4 verklebt. Selbstverständlich sollten im Hinblick auf eine optimale Schweißpunktqualität auch zwischen dem Folienabschnitt 5 sowie den Blechen 3 keine Klebeeffekte auftreten.

Daher besteht die dem Aluminiumblech 3 zugewandte Oberfläche des Folienabschnittes 5 aus einem Material mit hohem Nickel-Anteil, während in der Kontaktfläche zwischen der Elektrodenkappe 4 sowie dem Folienabschnitt Molybdän oder Graphit als Material vorgesehen ist. Mit diesen Materialkombinationen auf den beiden Seiten des Folienabschnittes 5, d. h. auf der dem Aluminiumblech 3 zugewandten Seite und auf der der Elektrodenkappe 4 zugewandten Seite, wurden in zahlreichen Versuchsreihen mit den unterschiedlichsten gängien Aluminiumblechen 3 bei Verwendung ansonsten üblicher Elektrodenkappen 4 optimale Schweißergebnisse erzielt, d. h. es wurden inbesondere keinerlei Klebeeffekte beobachtet.

Wie bereits erläutert, ist der Folienabschnitt 5 bevorzugt Bestandteil des Folienbandes 10. Letzteres kann aus Kupfer gefertigt sein, da es sich hierbei um ein thermisch sowie elektrisch gut leitfähiges Material handelt, und auf seiner den Aluminium-Blechen 3 zugewandten Oberfläche mit Nickel oder einer geeigneten Nickel-Legierung mit hohem Nickelanteil beschichtet sein. Besonders vorteilhaft ist es jedoch, das Folienband selbst aus diesem beschriebenen Oberflächenmaterial, d. h. aus Nickel oder einer geeigneten Nickel-Legierung zu fertigen. Eine nachträgliche Beschichtung des Folienbandes zumindest auf der der Elektrodenkappe 4 zugewandten Oberflächenseite ist somit nicht erforderlich. Besonders geeignet für den geschilderten Zweck sind Nickel bzw. geeignete Nickel-Legierungen mit hohem Nickelanteil auch deshalb, da sich aus diesen Materialien besonders gut Folien bzw. Folienbänder 10 herstellen lassen. Möglicherweise gäbe es auch noch andere Materialien, die für den geschilderten Einsatzzweck geeignet wären, jedoch könnte hiermit die Herstellung von Folienbändern problematisch sein.

Als ein Beispiel für ein Material mit hohem Nickel-Anteil für das Folienband 10 bzw. für das der Elektrodenkappe 4 zugewandte Oberflächenmaterial des Folienabschnittes 5 kann eine Nickel-Legierung mit zumindest im wesentlichen 50 % Nickelanteil genannt werden, aber auch Constantan, d. h. CuNi 44, die ebenfalls einen ausreichend hohen Nickelanteil aufweist. Sowohl hiermit als auch unter Verwendung von reinem Nickel sind optimal geeignete Folienbänder 10 herstellbar, die im übrigen eine Dicke im Bereich von 0,02 bis 0,05 mm aufweisen.

Wie bereits erwähnt, sollen für die Elektrodenkappe gängige Materialien zum Einsatz kommen, so grundsätzlich Kupfer-Legierungen, beispielsweise Kupfer-Chrom-Zirkon oder CuAg. Nur dann wurden zwischen dem Folienabschnitt 5 sowie der Elektrodenkappe 4 keine Klebeeffekte beobachtet, wenn in dieser Kontaktfläche zwischen der Elektrodenkappe 4 sowie dem Folienabschnitt 5 als Material Molybdän oder Graphit vorherrschte. Dies ist realisierbar, wenn entweder die Elektrodenkappe auf der dem Folienabschnitt 5 zugewandten Oberfläche oder aber der Folienabschnitt 5 auf der der Elektrodenkappe 4 zugewandten Oberfläche mit Molybdän oder Graphit beschichtet ist. Die Beschichtung des Folienabschnittes 5 bzw. des Folienbandes 10 erfolgt dabei am einfachsten nach dem bekannten PVD-Verfahren (physical vapour deposition).

Besonders darauf hinzuweisen ist auf die Tatsache, daß es bei der Auswahl der beschriebenen und geeignetsten Materialkombinationen nicht ausreichend ist, nur die Verhältnisse zwischen dem Folienabschnitt 5 sowie dem Aluminiumblech 3 einerseits oder nur die Verhältnisse zwischen dem Folienabschnitt 5 sowie der Elektrodenkappe 4 andererseits zu betrachten. Vielmehr beeinflussen sich diese beiden Verhältnisse gegenseitig. So wurden beispielsweise mit Molybdän oder Graphit in der Kontaktfläche zwischen der Elektrodenkappe 4 sowie dem Folienabschnitt 5 keine guten Ergebnisse erzielt, wenn für die dem Aluminiumblech 3 zugewandte Oberfläche des Folienabschnittes 5 ein anderes Material als ein solches mit hohem Nickel-Anteil gewählt wurde. Erklärbar ist dies mit den unterschiedlichen metallurgischen und physikalischen Effekten, die in der Schweißzone während des Schweißvorganges aufgrund der extrem hohen Stromstärken, die dort übertragen werden, auftreten. Insofern war erfinderische Tätigkeit vonnöten, um unter Berücksichtigung des bekannten Standes der Technik zur vorgeschlagenen Elektrode zum Widerstands-Punktschweißen von Aluminium-Blechen 3 zu gelangen, mit der unter Serienbedingungen bei langer Standzeit optimale Schweißergebnisse erzielbar sind.

## Patentansprüche

1. Elektrode zum Widerstands-Punktschweißen von Aluminium-Blechen (3) mit einem zwischen der Elektrodenkappe (4) sowie der Blechoberfläche vorgesehenen Folienabschnitt (5), der relativ zur Elektrodenkappe (4) verschiebbar ist,
dadurch gekennzeichnet, daß die dem Aluminiumblech (3) zugewandte Oberfläche des Folienabschnittes (5) aus einem Material mit hohem Nickel-Anteil besteht, und daß in der Kontaktfläche zwischen der Elektrodenkappe (4) sowie dem Folienabschnitt (5) als Material Molybdän oder Graphit vorgesehen ist.

2. Elektrode nach Anspruch 1,
dadurch gekennzeichnet, daß das dem Aluminiumblech (3) zugewandte Oberflächenmaterial des Folienabschnittes (5) reines Nickel oder eine Legierung mit zumindest im wesentlichen 50 % Nickelanteil ist.

3. Elektrode nach Anspruch 1 oder 2,
dadurch gekennzeichnet, daß der Folienabschnitt (5) Teil eines Folienbandes (10) ist, das aus dem dem Aluminiumblech (3) zugewandten Oberflächenmaterial besteht.

4. Elektrode nach einem der Ansprüche 1 bis 3,
dadurch gekennzeichnet, daß die der Elektrodenkappe (4) zugewandte Oberfläche des Folienabschnittes (5) mit Molybdän oder Graphit beschichtet ist.

5. Elektrode nach einem der Ansprüche 1 bis 3,
dadurch gekennzeichnet, daß die dem Folienabschnitt (5) zugewandte Oberfläche der aus einer geeigneten Kupfer-Legierung bestehenden Elektrodenkappe (4) mit Molybdän der Graphit beschichtet ist.
